# EUROPÄISCHE PATENTSCHRIFT

(11) **EP 3 918 903 B1**
(45) Veröffentlichungstag und Bekanntmachung des Hinweises auf die Patenterteilung: **25.12.2024**
(21) Anmeldenummer: 21171852.3
(22) Anmeldetag: 03.05.2021
(51) Int. Cl.: A01D 34/835, A01D 45/02

(54) **WERKZEUG FÜR EIN MULCHGERÄT ZUR BEARBEITUNG VON PFLANZENSTOPPELN AUF EINEM FELD**
TOOL FOR A MULCHING APPARATUS FOR PROCESSING PLANT STUMPS ON A FIELD
OUTIL POUR UN APPAREIL DE PAILLAGE DESTINÉ AU TRAITEMENT DES CHAUMES DES PLANTES DANS UN CHAMP

(30) Priorität: 03.06.2020 DE 102020206950
(43) Veröffentlichungstag der Anmeldung: 08.12.2021
(73) Patentinhaber: Deere & Company, Moline, IL 61265 (US)
(72) Erfinder: Weitenberg, Clemens, 68163 Mannheim (DE); Awater, Klaus, 68163 Mannheim (DE); Huening, Martin, 68163 Mannheim (DE); Schild, Jan-Dirk, 68163 Mannheim (DE)
(74) Vertreter: Holst, Sönke

(56) Entgegenhaltungen:
- DE-A1- 102016 213 919
- FR-A1- 3 005 826
- US-A1- 2017 208 741

## Beschreibung

Die Erfindung betrifft ein Mulchgerät zur Bearbeitung von Pflanzenstoppeln auf einem Feld nach dem Oberbegriff des Anspruchs 1.

### Stand der Technik

Unterhalb von Erntevorsätzen zur Getreide- oder Maisernte werden in vielen Fällen Mulchgeräte zur Zerkleinerung und/oder Zerfaserung der nach der Ernte auf dem Feld verbleibenden Pflanzenstümpfe angebracht, sei es zur Schonung der Reifen der auf dem Feld fahrenden Fahrzeuge, zur Verbesserung der Verrottung der Pflanzenreste oder zur Vernichtung des Überwinterungsraumes des Maiszünslers (*Ostrinia nubilalis*)*.*

Die Mulchgeräte umfassen stumpfe oder schneidende Werkzeuge, die starr oder frei pendelnd mit einer Halterung verbunden sind, welche an einer sich zumindest näherungsweise vertikal erstreckenden, in Rotation versetzten Welle angebracht ist (vgl. die als gattungsbildend angesehene Ausführungsform gemäß Figur 10 von EP 3 272 199 A1). In der Praxis haben sich zur Zerfaserung der Pflanzenstümpfe die stumpfen Werkzeuge bewährt, während man schneidende Werkzeuge üblicherweise zur Zerkleinerung der oberen Teile der Pflanzenstängel verwendet, die in Maispflückem von den Pflückwalzen nach unten abgegeben werden (s. DE 10 2016 213 919 A1).

Als stumpfe Werkzeuge werden im Stand der Technik massive, kugel- oder zigarrenförmige Körper verwendet, die starr oder über flexible Elemente, wie Ketten, mit der Welle verbunden werden (EP 3 272 199 A1), oder gemäß der nachveröffentlichten DE 10 2019 216 223 A1 zylindrisch geformt und durch Pendellager mit einer mit der Welle gekoppelten Halterung verbunden sind. Die starre Anbringung an der Welle hat den Nachteil, dass das Werkzeug im Fall eines Zusammenpralls mit einem auf dem Feld liegenden Fremdkörper (Stein) zumindest stärker als bei pendelnder Aufhängung (die ein Ausweichen des Werkzeugs gegenüber der antreibenden Welle nach hinten ermöglicht) verformt wird, während man bei pendelnder Aufhängung Sorge tragen muss, dass das Werkzeug in vertikaler Richtung symmetrisch ist und kein Kippmoment auf das Pendellager erzeugt, welches bestrebt ist, das Werkzeug aus der zur Drehrichtung senkrechten Richtung zu verkippen und zu vorzeitigem Verschleiß des Pendellagers führen würde. Dieses Problem stellt sich bei den im Stand der Technik verwendeten, massiven, zylindrischen Körpern nicht oder nur in geringem Maße, da diese im Wesentlichen symmetrisch zur quer zur Drehachse verlaufenden Längsmittelebene des Werkzeugs geformt sind, bzw. eine evtl. vorhandene vertikale Asymmetrie des Werkzeugs bei der Anordnung nach DE 10 2019 216 223 A1 durch eine ballige Form der Pendellagerung ausgeglichen wird, die eine Bewegung des Werkzeugs gegenüber der Halterung um eine tangential zur Drehrichtung des Werkzeugs orientierte Achse ermöglicht, jedoch zusätzlichen Aufwand bedeutet. Allerdings erfordern die bekannten Werkzeuge relativ viel Material, von dem jedoch zumindest die obere Hälfte nicht mit den Pflanzenstümpfen zusammenwirkt, was die Herstellung der Werkzeuge preisaufwändig macht.

Die US 2017/0208741 A1 zeigt ein Mähgerät mit pendeln aufgehängten Werkzeugen, die einen Befestigungsbereich, einen tordierten Übergangsbereich und einen halbkreisförmigen Bearbeitungsbereich, dessen vorlaufende Kante mit einer Schneide versehen ist, von welcher aus sich der Bearbeitungsbereich halbkreisförmig nach oben erstreckt. Bei einer Ausführungsform liegt der Massenschwerpunkt des Werkzeugs in der Symmetrieebene des Befestigungsbereichs. Damit soll verhindert werden, dass das Werkzeug nach oben pendelt und mit dem oberen Abdeckblech des Mähgeräts in Kontakt kommt.

### Aufgabe

Die vorliegende Erfindung hat sich zum Ziel gesetzt, ein gegenüber dem Stand der Technik verbessertes Mulchgerät bereitzustellen.

### Lösung

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Ein Mulchgerät zur Bearbeitung von Pflanzenstoppeln auf einem Feld, das sich insbesondere zur Anbringung an einem Erntevorsatz eignet, umfasst eine Halterung, die mit einer Welle verbunden und durch die Welle in eine Rotationsbewegung versetzbar ist, sowie zwei diametral gegenüberliegend an der Halterung angebrachte Werkzeuge, die durch Pendellagerungen mit parallel zur Drehachse der Welle verlaufenden Pendelachsen frei pendelnd an der Halterung gelagert sind. Selbstverständlich könnte die Halterung auch zur Anbringung von 3, 4, 5, oder mehr Werkzeugen dienen, die symmetrisch zur Welle angeordnet werden, um Umrundheiten beim Rotieren zu vermeiden.

Ein Werkzeug des Mulchgeräts umfasst einen Befestigungsbereich, der konfiguriert ist, um eine Rotationsachse pendelnd mit einer Halterung gekoppelt zu werden und durch welchen eine gedachte, orthogonal zur Rotationsachse orientierte Symmetrieebene verläuft, und einen Bearbeitungskörper, der konfiguriert ist, die auf einem Feld stehenden Pflanzenstoppeln zu zerfasern und der bezüglich der Symmetrieebene - d.h. entlang der Rotationsachse gemessen - asymmetrisch ausgeformt ist. Das Werkzeug ist derart geformt, dass sein Massenschwerpunkt in der Symmetrieebene liegt. Der Bearbeitungskörper weist eine stumpfe, vorlaufende Fläche auf, die in an sich bekannter Weise zum Zerfasern der Pflanzenstoppeln dient.

Mit anderen Worten umfasst das Werkzeug einen Befestigungsbereich, der um eine Rotationsachse frei pendelnd mit einer Halterung koppelbar ist, die mit einer drehbaren Welle verbunden ist. Durch den Befestigungsbereich verläuft eine gedachte Symmetrieebene, die sich quer zur Rotationsachse erstreckt. Diese Symmetrieebene verläuft genau durch die Mitte des Befestigungsbereichs, d.h. auf der Hälfte seiner entlang der Rotationsachse gemessenen Höhe. Das Werkzeug umfasst zudem einen Bearbeitungskörper, der derart geformt ist, dass er beim Anprall gegen die auf einem Feld stehenden Pflanzenstoppeln diese durch (insbesondere stumpfe) Einwirkung zerfasert oder anderweitig zerlegt. Der Bearbeitungskörper ist in Richtung der Rotationsachse betrachtet asymmetrisch geformt, d.h. er muss keinen über seine gesamte radiale Abmessung kreiszylindrischen, rechteckigen oder anderweitig zu seiner Längsmittelebene oder zur Symmetrieebene spiegel-symmetrischen Querschnitt umfassen, bei dem der Massenschwerpunkt automatisch und zwangsweise in der geometrischen Symmetrieebene des Bearbeitungskörpers liegt, sondem kann beliebig anderweitig geformt sein, z.B. einen U-förmigen Querschnitt mit hohlem oder gefüllten Innenbereich aufweisen. Das führt dazu, dass der Massenschwerpunkt des Bearbeitungskörpers nicht unbedingt auf seiner geometrischen Symmetrieebene liegen muss, sondem entlang der Rotationsachse versetzt sein kann. Um das eingangs beschriebene, durch die Asymmetrie des Bearbeitungskörpers entstehende Kippmoment an der Pendellagerung des Werkzeugs zu vermeiden, ist das Werkzeug - als Ganzes - so ausgeformt, dass der Massenschwerpunkt des gesamten Werkzeugs dennoch in der Symmetrieebene liegt. Somit kann ein beliebiger und geeigneterer (und preiswerter herstellbarer) Querschnitt des Bearbeitungsbereichs als der bekannte, zylindrische Querschnitt gewählt werden, ohne dass ein Kippmoment entstehen würde. Die Abweichung der Form des Bearbeitungsbereichs von einer Spiegelsymmetrie gegenüber der Symmetrieebene wird durch die geschickte Wahl der Position des Befestigungsbereichs ausgeglichen.

Insbesondere kann der Befestigungsbereich durch einen abgekröpften Verbindungsabschnitt mit dem Bearbeitungskörper verbunden sein, um die Bedingung zu erreichen, dass der Massenschwerpunkt des Werkzeugs in der Symmetrieebene liegt. Bei dieser oder einer anderen Ausführungsform könnte man diese Bedingung jedoch auch durch zusätzliche Ausgleichsmassen erzielen, die eine Asymmetrie des Bearbeitungskörpers gegenüber der Symmetrieebene ausgleichen. Bei einer anderen Ausführungsform könnte man die Symmetrieebene des Befestigungsbereichs einfach direkt in die Ebene legen, in welcher der Massenschwerpunkt des (asymmetrischen) Bearbeitungskörpers liegt. Man könnte die in diesem Absatz beschriebenen Merkmale auch in beliebiger Weise kombinieren.

Insbesondere kann der Bearbeitungskörper einen halbkreisförmigen Querschnitt (massiv oder als U geformt) aufweisen, wobei eine gedachte, die Enden der beiden Schenkel des Halbkreises verbindende Linie quer oder parallel zur Rotationsachse orientiert ist oder einen dazwischen liegenden Winkel annimmt.

Der Bearbeitungskörper kann in seinem dem Befestigungsbereich benachbarten Abschnitt in sich tordiert sein. Dadurch erreicht man einen weichen Übergang zwischen dem Befestigungsbereich, der sich in der Symmetrieebene des Werkzeugs erstreckt, zum äußeren Abschnitt des Bearbeitungskörpers, dessen vorlaufende Oberfläche sich mehr oder weniger quer zur Symmetrieebene des Werkzeugs, und somit eher parallel zur Drehachse erstrecken kann.

Vorzugsweise ist das Werkzeug einteilig hergestellt, insbesondere durch Gießen, Schmieden oder Drücken. Es wäre jedoch auch denkbar, es als Schweiß- oder Schraubzusammenbau herzustellen.

### Ausführungsbeispiel

In den Zeichnungen wird ein nachfolgend näher beschriebenes Ausführungsbeispiel dargestellt. Es zeigen:
- Fig. 1: eine Seitenansicht einer Erntemaschine mit einem daran angebrachten Erntevorsatz, an dem Mulchgeräte angebracht sind,
- Fig. 2: eine perspektivische Ansicht eines Mulchgeräts von vorn und unten,
- Fig. 3: eine Explosionsansicht der Halterung und der Werkzeuge des Mulchgeräts, und

- Fig. 4: eine seitliche Ansicht eines Werkzeugs.

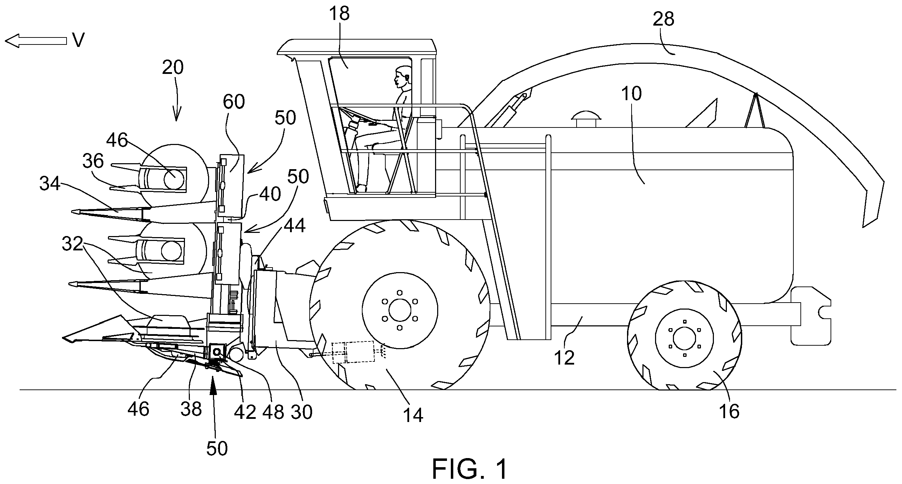

Eine in der Figur 1 gezeigte landwirtschaftliche Erntemaschine 10 in der Art eines selbstfahrenden Feldhäckslers baut sich auf einem Rahmen 12 auf, der von vorderen und rückwärtigen Rädern 14 und 16 getragen wird. Die vorderen Räder 14 dienen als Hauptantriebsräder, während die rückwärtigen Räder 16 lenkbar sind. Die Bedienung der Erntemaschine 10 erfolgt von einer Fahrerkabine 18 aus, von der aus ein Erntevorsatz 20 einsehbar ist. Mittels des Emtevorsatzes 20 vom Boden aufgenommenes Gut, z. B. Mais, wird über ein Einzugsgehäuse 30 einer nicht eingezeichneten Häckseltrommel im Innern der Erntemaschine 10 zugeführt, die es in kleine Stücke häckselt und es einer (ebenfalls nicht eingezeichneten) Fördervorrichtung aufgibt. Das Gut verläßt die Erntemaschine 10 zu einem nebenher fahrenden Anhänger über einen um die Hochachse drehbaren und höhenverstellbaren Auswurfkrümmer 28. Zwischen der Häckseltrommel und der Fördervorrichtung kann eine nicht eingezeichnete Nachzerkleinerungsvorrichtung angeordnet sein. Obwohl die Erfindung hier an einem Feldhäcksler dargestellt wird, kann sie auch an Mähdreschern mit zugehörigen Erntevorsätzen in Form von Maispflückern Verwendung finden. Im Folgenden beziehen sich Richtungsangaben, wie vor, hinter, seitlich und oberhalb auf die Vorwärtsrichtung der Erntemaschine 10 und des Erntevorsatzes 20, die in der Figur 1 nach links verläuft.

Zum Aufnehmen des Ernteguts dient der Erntevorsatz 20, der in Vorwärtsrichtung an der Frontseite der Erntemaschine 10 befestigt ist. Der Emtevorsatz 20 ist in der der dargestellten Ausführungsform ein an sich bekannter Maismähvorsatz, der einen Mittelteil 38 und zwei (bezüglich der Vorwärtsrichtung der Erntemaschine 10) seitlich links und rechts neben dem Mittelteil 38 angeordneten Seitenteile 40 umfasst. Die Seitenteile 40 sind zum Straßentransport nach oben schwenkbar am Mittelteil 38 befestigt und können zum Ernteeinsatz hydraulisch heruntergeschwenkt werden, so dass sie beim Erntebetrieb parallel zum Mittelteil 38 verlaufen. Anschließend können sie wieder hinauf geschwenkt werden. Die Figur 1 zeigt die Seitenteile 40 in hochgeschwenktem Zustand. Am Mittelteil 38 sind in der vorliegenden Ausführungsform vier Emteeinheiten 32 mit unteren Schneidscheiben zum Abschneiden der Pflanzen und oberen Förderscheiben zum Abtransport der Pflanzen angebracht, während an beiden Seitenteilen 40 jeweils zwei Emteeinheiten 32 angebracht sind. Der Erntevorsatz 20 ist in an sich bekannter Weise mit Halmteilem 36, den Emteeinheiten 32, Teilerspitzen 34, Abdeckplatten und Fördermitteln ausgestattet, um das geerntete Gut der Häckseltrommel der Erntemaschine 10 zuzuführen. Der Emtevorsatz 20 zieht im Betrieb die Stängel des Mähguts in aufrechter Stellung ein, schneidet sie ab und führt sie dem Einzugsgehäuse 30 zu, vom dem zur Häckseltrommel der Erntemaschine 10 gefördert werden.

Der Erntevorsatz 20 umfasst einen Trägerrahmen, der einen unteren Querträger 42 und einen oberen Querträger 44 aufweist. Der untere Querträger 42 erstreckt sich unten an der Rückseite des Emtevorsatzes 20 und umfasst drei Segmente, von denen jeweils eines dem Mittelteil 38 und eines jedem Seitenteil 40 zugeordnet ist. An der Vorderseite des unteren Querträgers 42 sind Getriebegehäuse 46 angeschraubt, die zum Antrieb jeweils einer Ernteeinheit 32 dienen. Eine Antriebswelle 48 zum Antrieb der Emteeinheiten 32 über in den Getriebegehäusen 46 angeordnete Getriebe, die auch zum Antrieb der weiteren Fördermittel des Erntevorsatzes 20 dient und von einer Abtriebswelle der Erntemaschine 10 angetrieben wird, erstreckt sich in seitlicher Richtung innerhalb des hohlen unteren Querträgers 42.

Der obere Querträger 44 erstreckt sich in seitlicher Richtung oberhalb des Einlasses des Einzugsgehäuses 30 über dessen Breite. Er ist mit hakenförmigen Tragelementen verbunden, die von komplementären Tragelementen des Einzugsgehäuses 30 teilweise untergriffen werden und zur Befestigung des Erntevorsatzes 20 an der Erntemaschine 10 dienen. Er ist durch sich vertikal erstreckende Träger und Verbindungsbleche mit dem unteren Querträger 42 verbunden. Der Trägerrahmen mit den Querträgern 42, 44 und den sich vertikal erstreckenden Trägem und Verbindungsblechen bildet somit ein Skelett des Erntevorsatzes 20, das alle weiteren Elemente des Erntevorsatzes 20 trägt.

Rückwärtig jeder Emteeinheit 32 ist jeweils ein Mulchgerät 50 angebracht. Das Mulchgerät 50 ist mit seiner Drehachse in seitlicher Richtung rückwärtig von der Drehachse der zugehörigen Emteeinheit 32 angeordnet. Dort laufen im normalen Emtebetrieb die Pflanzen ein. Falls eine Emteeinheit 32 mehrere Pflanzenreihen aberntet, können ihr mehrere Mulchgeräte 50 zugeordnet werden, deren Drehachsen rückwärtig der zu erwartenden Einlaufstellen der Pflanzenreihen angeordnet sind. Es wäre auch denkbar, die Mulchgeräte 50 lückenlos oder mit kleinen Lücken über die ganze Arbeitsbreite des Erntevorsatzes 20 zu verteilen.

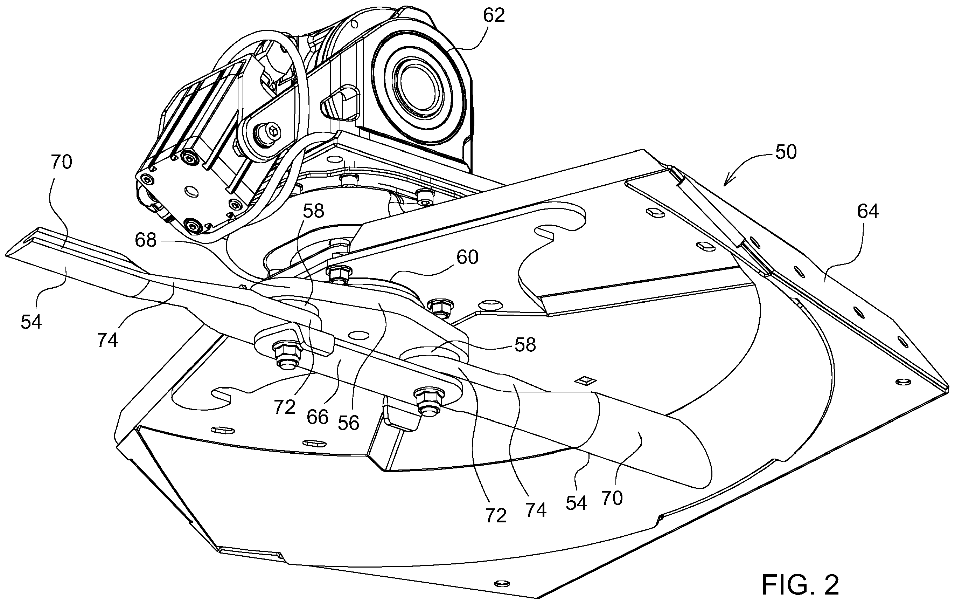

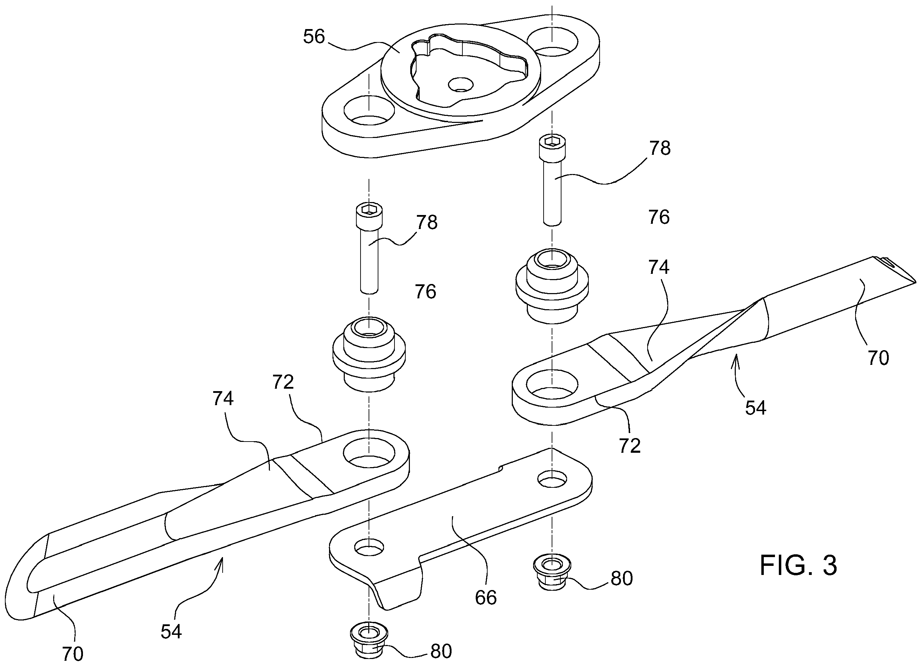

Es wird nun auf die Figur 2 verwiesen. Das Mulchgerät 50 umfasst zwei sich diametral gegenüber liegende Werkzeuge 54, die über Pendellagerungen 58 um die Hochachse pendelnd mit einer mittigen Halterung 56 verbunden sind. Die Halterung 56 ist ihrerseits mit einer Welle 60 (s. Figur 3) verbunden, deren Drehachse sich parallel zu den Achsen erstreckt, um welche die Werkzeuge durch die Pendellagerungen 58 an der Halterung 56 schwenkbar gelagert sind.

Die Welle 60 ist an ihrem unteren Ende mit der Halterung 56 verbunden und an ihrem oberen Ende mit einem Getriebe 62 antriebsverbunden, das durch die Antriebswelle 48 antreibbar ist. Die Welle 60 ist gegenüber der Antriebswelle 48 und dem unteren Querträger 42 um die Achse der Antriebswelle 48 frei schwenkbar gelagert. Eine Abdeckung 64, die das Mulchgerät nach hinten und rückwärtig der Welle 60 nach oben hin abdeckt, umschließt die Welle 60 und bewegt sich mit der Welle 60 und dem Mulchgerät 50 bodenkopierend um die Achse der Antriebswelle 48. Weitere Einzelheiten hierzu sind in der EP 3 272 199 A1 beschrieben, deren Offenbarung durch Verweis mit in die vorliegenden Unterlagen aufgenommen wird.

Die Halterung 56 umfasst einen oberen Teil 68, der mit der Welle 60 verbunden ist, sowie einen unteren Teil 66. Zwischen den beiden Teilen 66, 68 sind die Werkzeuge 54 positioniert. Die beiden Teile 66, 68 sind untereinander durch die Pendellagerungen 58 verbunden.

Die Werkzeuge 54 umfassen jeweils einen Bearbeitungskörper 70, der sich (wenn sich die Welle 60 dreht und die Werkzeuge 54 durch die Fliehkraft nach außen gezogen und nicht durch Fremdkörper beeinflusst werden) in radialer Richtung von den Pendellagerungen 58 nach außen erstreckt, und einen Befestigungsbereich 72, durch welchen die Pendellagerungen 58 mit dem Werkzeug 54 verbunden sind.

Die beiden Werkzeuge 54 sind baugleich und im montierten Zustand bezüglich einer sich quer zur Längsachse der Welle 60 erstreckende Achse zueinander um 180° gedreht, wie in den Figuren 2 und 3 erkennbar ist. Man benötigt somit nicht zwei verschiedene Werkzeuge 54 für das Mulchgerät 50, was die Ersatzteilhaltung vereinfacht.

Anhand der in Figur 3 dargestellten Explosionsansicht ist erkennbar, dass die - mittig zur Aufnahme der Buchsen 74 gelochten - Befestigungsbereiche 72 der Werkzeuge 54 durch Buchsen 74 mit dem oberen Teil 68 und dem unteren Teil 66 der Halterung 56 verbunden werden. Die Buchsen 74 werden durch Schrauben 78 und Muttern 80 fixiert. Der untere Teil 66 der Halterung 56 kann gegenüber der in Figur 3 gezeigten Stellung umgedreht werden, sodass daran angeformte Laschen dann einen Anschlag bilden, der eine Rotation der Werkzeuge 54 nach vorn begrenzt.

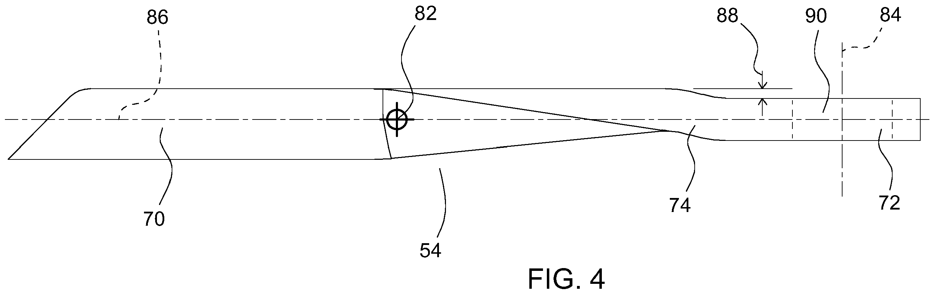

Es wird nun auf die Figur 4 verwiesen, in der eine seitliche Ansicht eines Werkzeugs 54 dargestellt ist. In Gesamtschau mit den Figuren 2 und 3 ist erkennbar, dass der Befestigungsbereich 72 und der Verbindungsbereich 74 in sich flach sind, wobei letzterer jedoch nach außen und oben hin abgekröpft ist. Der Bearbeitungskörper 70 hingegen weist, wozu insbesondere auf die Figur 3 verwiesen wird, einen etwa U-förmigen Querschnitt auf. Die in Drehrichtung vorlaufende Fläche des Bearbeitungskörpers 70 (im Betrieb drehen sich die Werkzeuge 54, wenn man sie in Figur 3 von oben betrachtet, im Uhrzeigersinn) ist somit konvex abgerundet, um die Pflanzenstoppeln effektiv zu zerkleinern. Eine gedachte Linie, welche die beiden äußeren Enden der Schenkel des U verbindet, schließt einen Winkel von etwa 45° mit der Ebene des Befestigungsbereichs 72 ein, obwohl dieser Winkel auch zwischen 0 und 90° liegen könnte. Nach innen hin flacht sich der vorlaufende, in der Figur 3 oben gezeigte Schenkel schräg ab und endet etwa am Anfang des Verbindungsbereichs 74. Der Bearbeitungskörper 70 ist, wie man in der Figur 3 am Besten erkennt, in seiner radial inneren Hälfte in sich tordiert. Am äußeren Ende ist der Bearbeitungskörper 70 schräg abgeschnitten, d.h. endet in einer Ebene, die einen Winkel mit dem Radius und mit der Ebene des Befestigungsbereichs 72 einschließt.

Es ist nach alledem erkennbar, dass der Bearbeitungskörper 70 eine relativ komplexe Formgestaltung aufweist, die eine optimale Bearbeitung der Pflanzenstoppeln bei gegebenem Materialaufwand und Gewicht des Werkzeugs 54 ermöglicht. Das Werkzeug 54 kann insbesondere durch Gießen, Schmieden oder Drücken hergestellt werden. Diese zur horizontalen Längsmittelebene des Werkzeugs 54 asymmetrische Formgestaltung führt jedoch dazu, dass der Massenschwerpunkt 82 des Werkzeugs 54 (als Ganzes, s. Figur 4) in einer Ebene 86 liegt, die ohne den Versatz 88, der durch den abgekröpften Verbindungsbereich 74 zwischen dem Befestigungsbereich 72 und dem Bearbeitungskörper 70 hergestellt wird, nicht in der Symmetrieebene 90 liegen würde, welche sich quer zur Drehachse 84 der Pendellagerung und durch die (in Figur 4 in vertikaler Richtung gesehene) Mitte des Befestigungsbereichs 72 erstreckt.

Durch die Abkröpfung des Verbindungsbereichs 74 erreicht man, dass der Massenschwerpunkt 82 in der Symmetrieebene 90 des Werkzeugs 54 liegt, sodass sich kein nennenswertes Kippmoment ergibt, welches bestrebt ist, das Werkzeug 54 in der Zeichenebene der Figur 4 zu verdrehen und eine nachteilige Auswirkung auf die Lebensdauer des Pendellagers hätte. Eine ballige Anordnung des Pendellagers erübrigt sich somit.

## Patentansprüche

1. Mulchgerät (50) zur Bearbeitung von Pflanzenstoppeln auf einem Feld, wobei:
das Mulchgerät (50) eine Halterung (56), die mit einer Welle (60) verbunden und durch die Welle (60) in eine Rotationsbewegung versetzbar ist, sowie zwei oder mehr symmetrisch zur Welle (60) an der Halterung (56) angebrachte Werkzeuge (54) zur Bearbeitung der Pflanzenstoppeln umfasst, und
die Werkzeuge (54) durch Pendellagerungen (58) mit parallel zur Drehachse der Welle (60) verlaufenden Pendelachsen frei pendelnd an der Halterung (56) gelagert sind, einen Befestigungsbereich (72) aufweisen, der um eine Rotationsachse (84) pendelnd mit einer Halterung (56) gekoppelt ist und durch welchen auf der Hälfte seiner entlang der Rotationsachse (84) gemessenen Höhe eine gedachte, orthogonal zur Rotationsachse (84) orientierte Symmetrieebene (90) verläuft, und einen bezüglich der Symmetrieebene (90) asymmetrisch ausgeformten Bearbeitungskörper (70) umfassen, der eine stumpfe, im Betrieb in Drehrichtung vorlaufende Fläche aufweist, welche konfiguriert ist, die auf einem Feld stehenden Pflanzenstoppeln zu zerfasern,
**dadurch gekennzeichnet, dass** das Werkzeug (54) derart geformt ist, dass sein Massenschwerpunkt (82) in der Symmetrieebene (90) liegt.

2. Mulchgerät (50) nach Anspruch 1, wobei der Befestigungsbereich (72) durch einen abgekröpften Verbindungsabschnitt (74) mit dem Bearbeitungskörper (70) verbunden ist.

3. Mulchgerät (50) nach Anspruch 1 oder 2, wobei der Bearbeitungskörper (70) einen halbkreisförmigen Querschnitt aufweist und eine gedachte, die Enden des Halbkreises verbindende Linie quer oder parallel zur Rotationsachse (84) orientiert ist oder einen dazwischen liegenden Winkel annimmt.

4. Mulchgerät (50) nach einem der Ansprüche 1 bis 3, wobei der Bearbeitungskörper (70) in seinem dem Befestigungsbereich (72) benachbarten Abschnitt in sich tordiert ist.

5. Mulchgerät (50) nach einem der Ansprüche 1 bis 4, wobei das Werkzeug (54) einteilig hergestellt ist, insbesondere durch Gießen, Schmieden oder Drücken.

6. Erntevorsatz (20) mit einem Mulchgerät (50) nach einem der Ansprüche 1 bis 5.

7. Selbstfahrende Erntemaschine (10) mit einem Erntevorsatz (20) nach Anspruch 6.

## Claims

1. Mulching apparatus (50) for working crop stubble in a field, wherein:
the mulching apparatus (50) comprises a mounting (56) which is connected to a shaft (60) and can be set in rotation by the shaft (60), and two or more tools (54) for working the crop stubble, which are attached to the mounting (56) so as to be symmetrical to the shaft (60); and
the tools (54) are mounted by pendulum mounts (58) so as to oscillate freely on the mounting (56), having pendulum axes that run parallel to the rotation axis of the shaft (60), have a fastening region (72) which is coupled to a mounting (56) so as to oscillate about a rotation axis (84) and through which, at half its height measured along the rotation axis (84), runs an imaginary symmetry plane (90) which is oriented orthogonally to the rotation axis (84), and comprise a working element (70) which is shaped to be asymmetrical in relation to the plane of symmetry (90) and has a blunt face which during operation extends in the rotating direction and is configured to shred the crop stubble in a field,
**characterized in that** the tool (54) is shaped in such a manner that its centre of gravity (82) is in the plane of symmetry (90).

2. Mulching apparatus (50) according to Claim 1, wherein the fastening region (72) is connected to the working element (70) by way of a bent connecting portion (74) .

3. Mulching apparatus (50) according to Claim 1 or 2, wherein the working element (70) has a semicircular cross-section, and an imaginary line connecting the ends of the semicircle is oriented transversely or parallel to the rotation axis (84), or assumes an angle between them.

4. Mulching apparatus (50) according to one of Claims 1 to 3, wherein the working element (70) in its portion adjacent to the fastening region (72) is inherently twisted.

5. Mulching apparatus (50) according to one of Claims 1 to 4, wherein the tool (54) is manufactured in one piece, in particular by casting, forging or pressing.

6. Harvesting attachment (20) having a mulching apparatus (50) according to one of Claims 1 to 5.

7. Self-propelled harvesting machine (10) having a harvesting attachment (20) according to Claim 6.

## Revendications

1. Broyeur (50) permettant de traiter des chaumes sur un champ, dans lequel :
le broyeur (50) comprend un support (56) qui est relié à un arbre (60) et peut être mis en rotation par l'arbre (60), ainsi que deux ou plusieurs outils (54) pour le traitement des chaumes, fixés au support (56) de manière symétrique par rapport à l'arbre (60), et
les outils (54) sont montés sur le support (56) de manière librement oscillante par des paliers articulés (58) avec des essieux oscillants s'étendant en parallèle à l'axe de rotation de l'arbre (60), présentent une zone de fixation (72) qui est couplée à un support (56) de manière oscillante autour d'un axe de rotation (84) et par laquelle, sur la moitié de sa hauteur mesurée le long de l'axe de rotation (84), s'étend un plan de symétrie (90) imaginaire orienté orthogonalement à l'axe de rotation (84), et comprennent un corps de traitement (70) façonné de manière asymétrique par rapport au plan de symétrie (90) et qui présente une surface tronquée, avançant dans le sens de la rotation en cours de fonctionnement et qui est configurée pour défibrer les chaumes se trouvant sur un champ,
**caractérisé en ce que** l'outil (54) est formé de telle sorte que son centre de masse (82) se trouve dans le plan de symétrie (90).

2. Broyeur (50) selon la revendication 1, dans lequel la zone de fixation (72) est reliée au corps de traitement (70) par une partie de liaison (74) coudée.

3. Broyeur (50) selon la revendication 1 ou 2, dans lequel le corps de traitement (70) présente une section transversale semi-circulaire, et une ligne imaginaire reliant les extrémités du demi-cercle est orientée transversalement ou en parallèle à l'axe de rotation (84) ou adopte un angle intermédiaire.

4. Broyeur (50) selon l'une quelconque des revendications 1 à 3, dans lequel le corps de traitement (70) est tordu en soi dans sa partie adjacente à la zone de fixation (72).

5. Broyeur (50) selon l'une quelconque des revendications 1 à 4, dans lequel l'outil (54) est fabriqué d'un seul tenant, en particulier par moulage, forgeage ou pressage.

6. Tête de récolte (20) comprenant un broyeur (50) selon l'une quelconque des revendications 1 à 5.

7. Moissonneuse automotrice (10) comprenant une tête de récolte (20) selon la revendication 6.
